# FASCICULE DE BREVET EUROPEEN

(11) **EP 3 534 536 B1**
(45) Date de publication et mention de la délivrance du brevet: **14.04.2021**
(21) Numéro de dépôt: 19158991.0
(22) Date de dépôt: 25.02.2019
(51) Int. Cl.: H03D 7/00

(54) **DISPOSITIF ET PROCEDE PHOTONIQUE DE CONVERSION DE FREQUENCE A DOUBLE BANDE**
VORRICHTUNG UND PHOTONISCHES VERFAHREN ZUR UMWANDLUNG EINER DOPPELBANDFREQUENZ
PHOTONIC DEVICE AND METHOD FOR DUAL BAND FREQUENCY CONVERSION

(30) Priorité: 01.03.2018 FR 1800178
(43) Date de publication de la demande: 04.09.2019
(73) Titulaire: Thales, 92400 Courbevoie (FR)
(72) Inventeur: BENAZET, Benoît, 31100 TOULOUSE (FR); SOTOM, Michel, 31100 TOULOUSE (FR); AVELINE, Muriel, 31100 TOULOUSE (FR)
(74) Mandataire: Marks & Clerk France

(56) Documents cités:
- EP-A1- 2 827 515
- FR-A1- 2 864 385
- FR-A1- 3 043 514
- JIANPING YAO: "Microwave Photonics", JOURNAL OF LIGHTWAVE TECHNOLOGY, IEEE SERVICE CENTER, NEW YORK, NY, US, vol. 27, no. 3, 1 février 2009 (2009-02-01), pages 314-335, XP011251715, ISSN: 0733-8724

## Description

L'invention porte sur un convertisseur de fréquence photonique double bande, ainsi que sur un procédé et une charge utile photonique à conversion de fréquence utilisant un tel convertisseur.

L'invention relève du domaine de la photonique. Elle est principalement, mais pas exclusivement, destinée à être appliquée au domaine des télécommunications spatiales. Elle vise en particulier à réduire la complexité, le poids, l'encombrement, le coût et/ou la consommation énergétique des charges utiles de télécommunications embarquées dans des satellites, et notamment des récepteurs utilisés à l'extrémité des liaisons montantes. Cependant, ce concept est également applicable pour la conversion vers une fréquence plus haute pour la transmission des signaux à radiofréquence (RF), notamment dans des liaisons descendantes.

Dans le domaine des télécommunications il est souvent nécessaire de réaliser des conversions de fréquence de signaux à radiofréquence, et notamment à hyperfréquence. Dans le domaine des télécommunications spatiales, des conversions de fréquence sont, par exemple, nécessaires afin de retransmettre sur une liaison descendante des signaux reçus via une liaison montante. Cela peut également servir, à abaisser la fréquence d'un signal reçu pour faciliter son traitement par des circuits électroniques, ou inversement à augmenter la fréquence d'un signal en vue de sa transmission. Enfin, il peut s'agir de combiner entre eux des signaux à radiofréquence issus de sources différentes et dont les spectres se superposent, auquel cas une conversion de fréquence est requise pour éviter des interférences. De manière conventionnelle, chaque opération de conversion de fréquence nécessite l'utilisation d'un mélangeur à radiofréquence distinct, alimenté par un oscillateur local. Lorsque le nombre de signaux à traiter est important, cela peut conduire à la réalisation de systèmes de conversion fréquentielle très complexes, et donc coûteux, lourds, encombrants et consommateurs de puissance - ces trois derniers paramètres étant particulièrement pénalisants dans les applications spatiales.

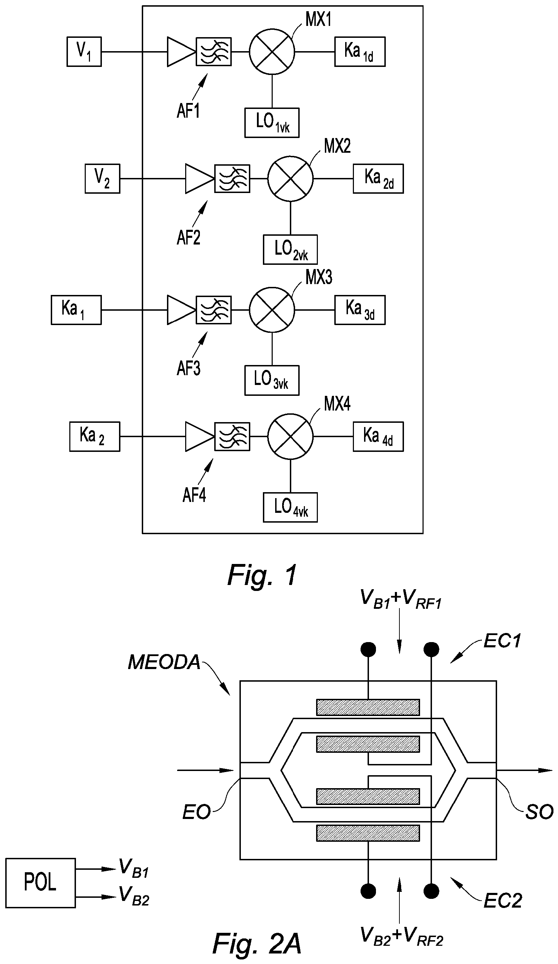

A titre d'exemple la figure 1 illustre schématiquement la structure et le fonctionnement d'un dispositif de conversion fréquentielle à hyperfréquences selon l'art antérieur. Ce dispositif reçoit en entrée quatre signaux à radiofréquence, par exemple deux (V₁, V₂) en bande V (40 - 75 GHz) et deux autres (Ka1, Ka2) en bande Ka (26,5 - 40 GHz). Après avoir été amplifiés et filtrés par des circuits d'amplification et filtrage respectifs, AF1, AF2, AF3, AF4, ces signaux sont fournis sur des premières entrées de quatre mélangeurs hyperfréquence respectifs, MX1, MX2, MX3, MX4. Chacun de ces mélangeurs reçoit également, sur une deuxième entrée, un signal mono-fréquentiel généré par un oscillateur local respectif LO₁ᵥₖ, LO₂ᵥₖ, LO₃ᵥₖ, LO₄ᵥₖ. A sa sortie, chaque mélangeur fournit un signal obtenu en mélangeant - c'est-à-dire en multipliant entre eux - les signaux présents à ces entrées. Concrètement, on récupère à la sortie de chaque mélangeur un signal composite contenant une première composante correspondant au signal présent sur la première entrée mais dont le spectre est décalé « vers le haut » d'une fréquence égale à celle du signal d'oscillateur local, et une deuxième composante correspondant également au signal présent sur la première entrée mais dont le spectre est décalé « vers le bas » de la fréquence d'oscillateur local. Typiquement, un filtre (non représenté) permet de sélectionner une seule de ces composantes. Dans l'exemple de la figure 1, les quatre signaux de sortie sélectionnés (Ka_{1d}, Ka_{2d}, Ka_{3d}, Ka_{4d}) appartiennent à la bande Ka. Le dispositif opère donc deux conversions de la bande V à la bande Ka et deux conversions à l'intérieur de la bande Ka.

Un inconvénient du dispositif de la figure 1 est que, pour opérer quatre conversions, il doit nécessairement utiliser quatre mélangeurs RF distincts. En effet, si deux signaux appartenant à la même bande (V₁ et V₂, ou Ka₁ et Ka₂) étaient injectés dans un même mélangeur, on récupérerait en sortie des signaux parasites correspondant à des produits d'intermodulation. De plus, la largeur de bande utile d'un mélangeur hyperfréquence est assez étroite et ne permet pas d'opérer sur des signaux appartenant à des bandes de fréquence différentes. Les charges utiles des satellites de télécommunications sont généralement conçues pour effectuer plusieurs dizaines de conversions de fréquence, et nécessitent donc un nombre correspondant de mélangeurs. Cela a un impact très significatif sur les paramètres critiques de la charge utile : sa masse, son encombrement, et sa consommation énergétique.

Il est connu de transposer plusieurs signaux à radiofréquence sur des porteuses optiques respectives, puis de les convertir en fréquence en utilisant des modulateurs électro-optiques en lieu et place des mélangeurs à radiofréquence du système de la figure 1. Lorsqu'on utilise un modulateur pour chaque signal à convertir, cette approche - que l'on peut qualifier de « photonique » - n'apporte qu'une réduction limitée de la masse, de l'encombrement et/ou de la consommation énergétique de la charge utile. Elle permet entre autres d'obtenir dans certains cas une plus grande pureté spectrale en sortie de conversion, et de pouvoir transporter le signal par fibre optique, mais elle requiert autant de mélangeurs qu'il n'y a de signaux RF à traiter.

Dans certains cas, cependant, une approche photonique permet une réduction du nombre de modulateurs, i.e. de mélangeurs. Par exemple, il est connu de transférer les signaux à radiofréquence sur des porteuses optiques de longueurs d'onde différentes, de les multiplexer et de les appliquer à l'entrée d'un seul et unique modulateur. Voir par exemple le document FR 3 043 514. Cette approche, cependant, ne peut être utilisée que lorsqu'on souhaite appliquer un même décalage fréquentiel à plusieurs signaux RF. Elle n'est d'aucune utilité lorsque plusieurs signaux à radiofréquence doivent subir des décalages fréquentiels différents.

Une autre approche photonique consiste à transférer une pluralité de signaux mono-fréquentiels d'oscillateurs locaux sur des porteuses optiques à des longueurs d'onde différentes, à les multiplexer, et à les appliquer à l'entrée d'un modulateur électro-optique pour les mélanger à un signal à radiofréquence. Voir par exemple le document FR 2 864 385. Cette approche convient uniquement au cas où il s'agit d'appliquer simultanément plusieurs décalages fréquentiels à un même signal à radiofréquence. Elle n'est non plus d'aucune utilité lorsque plusieurs signaux à radiofréquence doivent subir des décalages fréquentiels différents.

L'invention vise à surmonter, en tout ou en partie, les inconvénients et limitations précités de l'art antérieur. Plus particulièrement, elle vise à procurer un dispositif permettant de réaliser, sur une pluralité de signaux RF distincts, des décalages fréquentiels pouvant être différents, et présentant une masse, une consommation énergétique et/ou un encombrement réduits par rapport à l'art antérieur.

Conformément à l'invention, ce but est atteint par le recours à une technique photonique, dans laquelle plusieurs signaux mono-fréquentiels d'oscillateurs locaux sont transférés sur des porteuses optiques à des longueurs d'onde différentes, multiplexés sur une même fibre optique, puis mélangés à deux signaux RF au moyen d'un même modulateur électro-optique. Cela permet de diviser le nombre de mélangeurs d'au moins un facteur deux, ce qui rend une telle solution photonique encore plus avantageuse. Un autre avantage de l'invention, ou d'au moins certains de ses modes de réalisation, est son caractère générique : en effet, un même convertisseur de fréquence peut être utilisé dans plusieurs bandes spectrales RF. Par ailleurs, l'utilisation d'une solution photonique conforme à l'invention permet d'obtenir, dans des conditions de polarisation particulières du modulateur, une meilleure pureté spectrale en termes de raies fréquentielles que dans le cas d'une solution purement « radiofréquence »; plus particulièrement, les produits d'intermodulation parasites peuvent être rejetés de manière plus efficace.

Un objet de l'invention est donc un convertisseur de fréquence photonique comprenant :
- un modulateur électro-optique d'intensité présentant une entrée optique et au moins une sortie optique ;
- un ensemble de sources optiques configurées pour générer des signaux optiques à au moins deux longueurs d'onde différentes, modulés par des signaux d'oscillateur local respectifs dont deux au moins présentent des fréquences différentes ;

- un multiplexeur optique agencé pour multiplexer lesdits signaux optiques et les injecter dans l'entrée optique du modulateur ;
   un système de détection optique/électrique configuré pour convertir des signaux optiques issus du modulateur électro-optique d'intensité vers le domaine radiofréquence ; et
- une banque de filtres électriques configurée pour extraire des composantes spectrales des signaux convertis vers le domaine radiofréquence ;
caractérisé en ce que le modulateur électro-optique d'intensité présente également au moins une entrée pour une tension continue et au moins deux entrées RF pour recevoir deux signaux radiofréquence de modulation à des fréquences différentes.

Selon différents modes de réalisation d'un tel convertisseur :
- Ledit modulateur électro-optique d'intensité peut être du type à interféromètre de Mach-Zehnder, et plus particulièrement :
   - du type à interféromètre de Mach-Zehnder à double accès RF et présente deux entrées RF pour deux signaux radiofréquence de modulation respectifs ; ou
   - du type à interféromètre de Mach-Zehnder I/Q et présente deux entrées RF pour deux signaux radiofréquence de modulation respectifs ; ou encore
   - du type à interféromètre de Mach-Zehnder à accès RF unique présentant une seule entrée RF, le convertisseur comprenant également un combineur de signaux RF configuré pour recevoir en entrée deux signaux RF de modulation respectifs, les combiner et les appliquer à ladite entrée RF du modulateur électro-optique d'intensité.
- Le convertisseur peut comprendre également un circuit de polarisation configuré pour appliquer à au moins une entrée de contrôle du modulateur électro-optique d'intensité une tension de polarisation adaptée pour minimiser l'intensité d'une composante spectrale des signaux optiques issus du modulateur électro-optique d'intensité à une fréquence somme ou différence des fréquences des signaux radiofréquence de modulation.
- Le convertisseur peut comprendre également un démultiplexeur optique agencé pour démultiplexer les signaux optiques issus du modulateur électro-optique d'intensité.
- Ledit modulateur électro-optique d'intensité peut être du type à double sortie optique complémentaire et le système de conversion optique/électrique peut comprendre au moins un photodétecteur équilibré.

Un autre objet de l'invention est une charge utile de télécommunication pour un satellite comprenant au moins un tel convertisseur de fréquence.

Encore un autre objet de l'invention est un procédé de conversion de fréquence au moyen d'un tel convertisseur, comprenant les étapes suivantes :
- appliquer à l'entrée ou aux entrées RF du modulateur électro-optique d'intensité du convertisseur deux signaux radiofréquence dont les fréquences doivent être converties ;
- activer les sources optiques du convertisseur et pour générer lesdits signaux optiques à au moins deux longueurs d'onde différentes, modulés par lesdits signaux d'oscillateurs locaux respectifs ;
- récupérer des signaux optiques issus de la sortie optique du modulateur électro-optique d'intensité, les convertir vers le domaine radiofréquence et les filtrer pour en extraire des composantes spectrales correspondant chacune à un signal radiofréquence d'entrée mélangé avec l'un desdits signaux d'oscillateur local.

Le procédé peut comprendre également l'étape suivante :
- appliquer à au moins une entrée de contrôle du modulateur électro-optique d'intensité une tension de polarisation adaptée pour minimiser l'intensité d'une composante spectrale des signaux RF issus du système de détection optique/électrique à une fréquence somme ou différence des fréquences des signaux radiofréquence de modulation.

D'autres caractéristiques, détails et avantages de l'invention ressortiront à la lecture de la description faite en référence aux dessins annexés donnés à titre d'exemple et qui représentent, respectivement :
- Les figures 2A à 2D, des schémas de différents modulateurs électro-optiques d'intensité pouvant convenir à la mise en œuvre de l'invention;
- La figure 2E, un graphique illustrant la fonction de transfert de modulation d'un modulateur électro-optique d'intensité pouvant convenir à la mise en œuvrede l'invention ;
- Les figures 3, 4, 5 et 6, des schémas de convertisseurs de fréquence photoniques selon quatre modes de réalisation de l'invention ;
- Les figures 7A, 7B, 7C, 8 et 9, des graphiques illustrant les performances de convertisseurs de fréquence photoniques selon différents modes de réalisation de l'invention ;
- Les figures 10 et 11, l'application d'une pluralité de convertisseurs de fréquence photoniques à une charge utile de satellite de télécommunications ; et
- La figure 12, le schéma d'un convertisseur selon un mode de réalisation particulier de l'invention, réalisant simultanément une conversion vers le haut (« up-conversion ») et vers le bas (« down-conversion »).

Dans le présent document, le terme « radiofréquence » ou « RF » sera entendu dans un sens large, couvrant toutes les fréquences dans la plage 3 kHz - 300 GHz. Les radiofréquences comprennent les hyperfréquences, ou microondes, qui correspondent aux fréquences comprises entre 1 GHz et 300 GHz.

L'invention sera décrite en référence à des modes de réalisation utilisant certains types de modulateurs électro-optiques d'intensité (dans la suite on parlera simplement de « modulateur électro-optiques » en omettant la précision « d'intensité ») à interféromètre de Mach-Zehnder, mais plus généralement tout type de modulateur électro-optique présentant un nombre d'accès supérieur à un peut convenir à la mise en œuvrede l'invention. Avant de décrire différents modes de mise en œuvrede l'invention, il est opportun de rappeler le principe de fonctionnement de différents types de modulateurs à interféromètre de Mach-Zehnder pouvant servir à cette mise en œuvre.

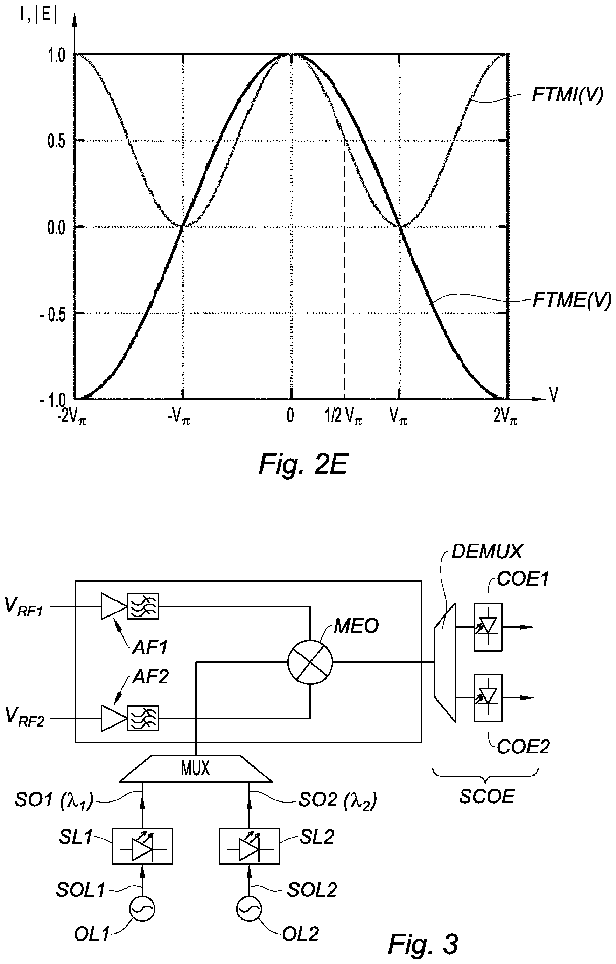

La figure 2A illustre un modulateur MEODA (Modulateur Electro-Optique à Double Accès RF (« dual-drive » en anglais).

La lumière, polarisée rectilignement, est injectée à l'entrée optique du composant. Elle se propage dans un guide d'onde planaire réalisé dans un matériau cristallin EO , tel le niobate de lithium (LiNbO₃), présentant un indice de réfraction variable linéairement en fonction du champ électrique appliqué (effet Pockels), Un coupleur en « Y » divise ce guide d'onde en deux bras parallèles entre lesquels le flux lumineux se répartit de manière équilibrée. Deux paires d'électrodes sont agencées de part et d'autre de chacun des bras de l'interféromètre ; une première paire d'électrodes est connectée à une première entrée, ou port RF EC1 et une deuxième première paire d'électrodes est connectée à une deuxième entrée RF EC2. Une tension, constante (DC, de l'anglais « direct current », c'est-à-dire courant continu) et/ou variable, appliquée à une entrée de contrôle modifie l'indice de réfraction du matériau, et donc la phase de la lumière qui parcourt le bras correspondant entrainant une variation du chemin optique. Les deux bras sont alors recombinés par un deuxième coupleur en « Y », ce qui permet à la lumière les parcourant d'interférer (le modulateur est donc essentiellement un interféromètre). Ainsi, l'intensité optique prélevée à la sortie SO du modulateur dépend du déphasage entre les deux bras du dispositif, et donc des tensions appliquées aux électrodes correspondantes.

Généralement, les modulateurs à double accès RF présentent des électrodes RF et DC différentes. Les structures les plus répandues présentent soit une électrode DC sur chacun des bras de l'interféromètre si bien que deux tensions continues séparées peuvent être appliquées distinctement sur chacun des bras de l'interféromètre, soit une seule électrode DC sur deux bras de l'interféromètre. Dans ce cas, une seule tension continue est appliquée au composant. C'est le cas le plus général.

Dans le premier mode de réalisation avec un modulateur similaire à celui de la figure 2A, une première tension de polarisation continue V_{B1} générée par un circuit de polarisation POLAR et un premier signal à radiofréquence V_{RF1} sont appliqués respectivement à la première entrée de contrôle DC et à la première entrée RF ; et une deuxième tension continue de polarisation V_{B2} générée par le circuit de polarisation POLAR et un deuxième signal RF V_{RF2} sont appliqués respectivement à la seconde entrée de contrôle DC et à la seconde entrée RF.

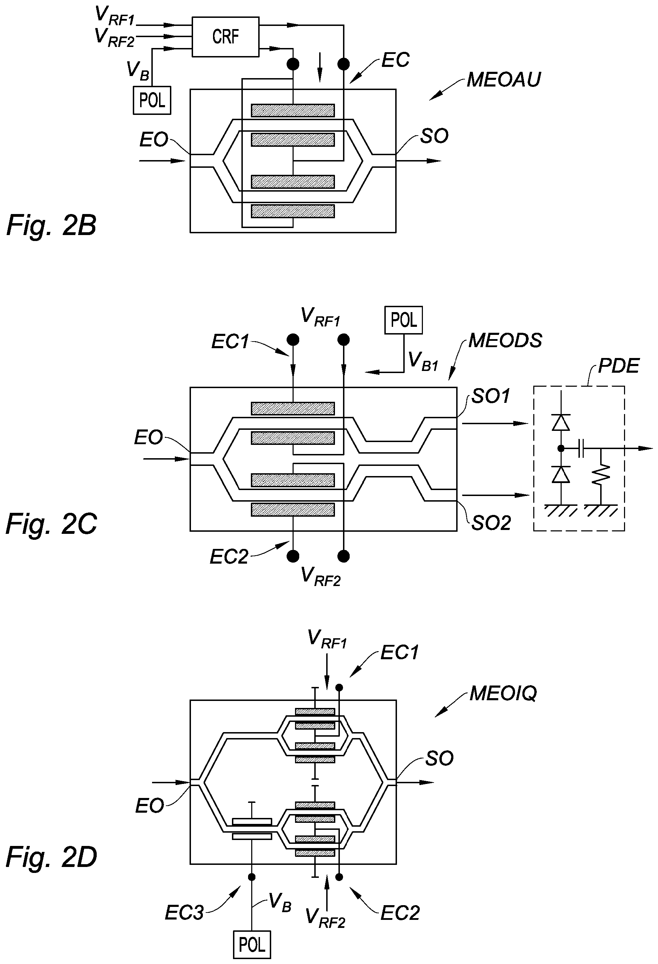

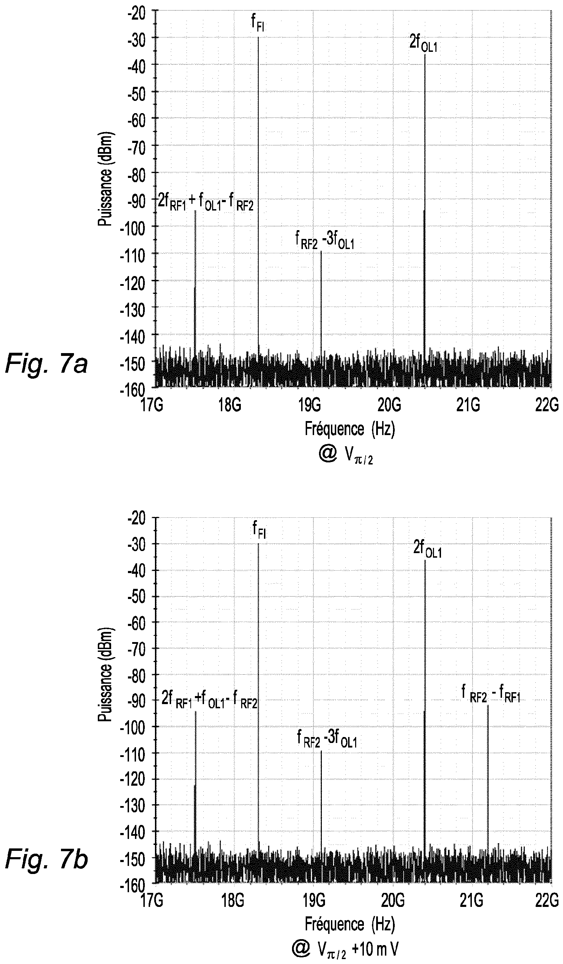

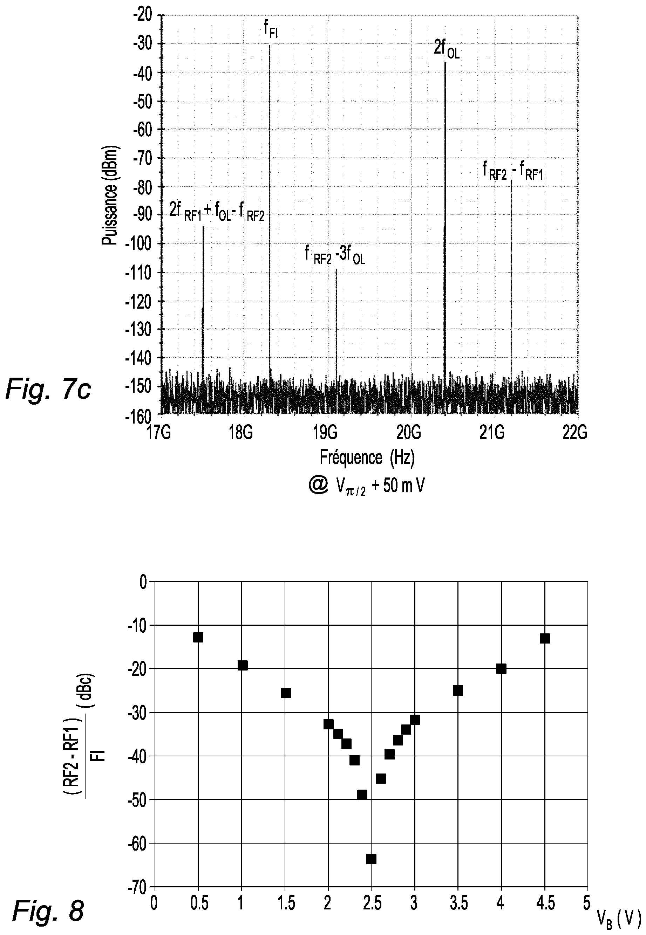

Les tensions de polarisation délivrées par le circuit de polarisation POLAR permettent de fixer le point de fonctionnement du modulateur. La figure 2D montre des graphes de la fonction de transfert de modulation en intensité FTMI et de la fonction de transfert d de modulation en champ électrique FTME en fonction de la tension V=|V_{B1}-V_{B2}|- On remarque que ces fonctions de transfert de modulation sont sinusoïdales. La tension V_{π} correspond à un déphasage de π radians entre les deux bras de l'interféromètre. La fonction de transfert en champ est linéaire autour d'une tension de polarisation V_{π} (plus généralement kV_{π}, avec k entier), tandis que la fonction de transfert en intensité est linéaire autour d'une tension de polarisation V_{π/2}=1/2 V_{π} (plus généralement, (k+1/2)V_{π}, avec k entier). Le choix du point de fonctionnement, et donc de la tension de polarisation, est très important ; comme cela sera illustré sur les figures 7A - C et 8. En effet, ce choix affecte de manière importante les performances du convertisseur de fréquence selon l'invention. Pour cette raison, le circuit de polarisation POLAR permettant de générer les tensions DC, inclut de préférence un système de contrôle en boucle fermée permettant de contrôler les dérives, notamment thermiques ou liées au vieillissement du composant.

Dans le cas de la figure 2A il a été considéré que deux tensions continues de polarisation sont appliquées à des entrées de contrôle respectives. Généralement, pour les composants proposés sur le marché une tension de polarisation unique (V_{B} dans la figures 2C) est appliquée au modulateur par l'intermédiaire d'une seule entrée de contrôle DC.

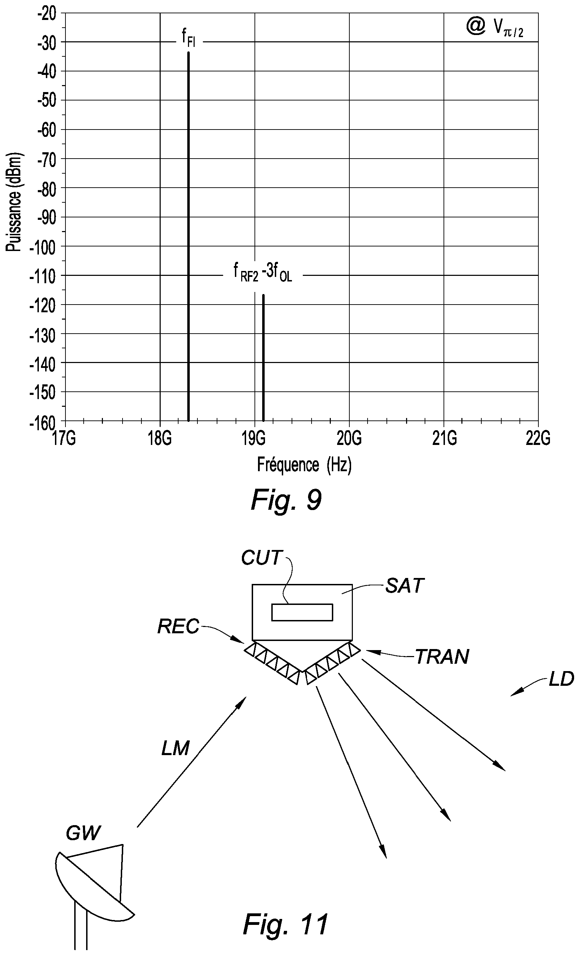

La figure 2B montre le schéma de principe d'un modulateur MEOAU à accès RF unique (« single-drive » en anglais). Ce modulateur se différencie du précédent en ce qu'il comprend une seule entrée RF, permettant d'appliquer un même signal RF - avec une polarité inversée - et une tension de polarisation V_{B} aux deux paires d'électrodes associées aux deux bras de l'interféromètre. Ce signal est obtenu en combinant les deux signaux RF ,V_{RF1} et V_{RF2}, dont les fréquences doivent être converties, au moyen d'un combineur RF noté CRF. En référence aux figures 8 et 9, l'utilisation d'un tel dispositif pour la mise en œuvrede l'invention ne permet pas d'atteindre des performances optimales. En outre, la nécessité d'utiliser des combineurs RF limite la bande passante du dispositif et enlève toute généricité en fréquence à ce type de convertisseur de fréquence

En variante, une seule paire d'électrodes peut être prévue pour appliquer le signal RF et la tension de polarisation à une seule branche. Comme expliqué en référence à la figure 2A, la tension de polarisation peut également être appliquée au moyen d'une entrée et d'une paire d'électrodes dédiées.

Le modulateur MEODS (Modulateur Electro-Optique à Double Sortie) de la figure 2C est du type à double accès RF et double sortie optique (« dual drive - dual output »). Il se différencie de celui présenté par la figure 2A dans le sens où le coupleur en « Y » de sortie est remplacé par un coupleur directionnel en « X ». Le modulateur MEODS comporte ainsi deux sorties optiques SO1, SO2, complémentaires l'une de l'autre ; le déphasage entre les deux bras du modulateur modifie la répartition de l'intensité lumineuse entre ces deux sorties. L'avantage d'une telle configuration est qu'elle permet d'utiliser une photodiode équilibrée notée PDE pour convertir le signal optique différentiel en sortie du modulateur en un signal électrique et bénéficier ainsi des avantages d'une telle détection (augmentation de l'amplitude du signal RF de sortie, suppression du bruit d'amplitude...).

Comme représenté sur la figure 2C, une photodiode équilibrée comprend deux entrées optiques, constituées de fibres amorces, alimentant respectivement deux photodiodes montées en série avec une sortie RF au point milieu. Pour un fonctionnement optimal de ce type de photodiode, il est nécessaire d'avoir un appairage en longueur des fibres d'entrée ce qui rend sa mise en place complexe par rapport à une photodiode PIN (positif-intrinsèque-négatif) ou UTC (de l'anglais « Uni-Travelling Carrier ») standard à une entrée optique unique. Un récepteur à paire d photodiodes équilibrées additionne à sa sortie la puissance des signaux différentiels présents sur ses deux entrées optiques et supprime les signaux de mode commun. En d'autres termes, il délivre un courant correspondant à la différence des courants générés respectivement par les deux photodiodes. Dans le cas idéal où les deux photodiodes sont parfaitement identiques (même sensibilité et longueurs de fibres égales), cela entraîne une annulation de la composante continue (et du bruit associé). Lorsque l'on utilise un convertisseur optique-électrique standard (avec entrée optique unique), les bruits dominants sont le bruit d'intensité relatif (RIN, de l'anglais « Relative Intensity Noise ») et le bruit de grenaille (« shot noise » en anglais). Le bruit de grenaille est proportionnel au courant moyen détecté, tandis que le bruit RIN est proportionnel au carré de ce courant. Comme le rapport signal-sur-bruit d'une liaison optique croît avec le carré du courant détecté, l'augmentation de la puissance optique est limitée par le RIN qui devient alors la source de bruit prédominante. Un détecteur équilibré permet de supprimer le RIN et contribue ainsi à améliorer le rapport signal sur bruit de la liaison.

La figure 2D illustre un autre type de modulateur électro-optique MEOIQ convenant à la mise en œuvrede l'invention. Il s'agit d'un modulateur à contrôle dual dit « I/Q » utilisé généralement pour des liaisons numériques avec des formats de modulation complexes comme la modulation d'amplitude en quadrature (en anglais, quadrature amplitude modulation : QAM), les modulations de phase QPSK (en anglais, Quaternary Phase-Shift Keying) ou m-PSK (m-ary Phase-Shift Keying), ou encore la modulation d'amplitude et de phase (en anglais, Amplitude and Phase-Shift Keying ou Asymmetric Phase-Shift Keying : APSK). Il comprend 2 modulateurs de Mach-Zehnder indépendants intégrés dans un interféromètre de Mach-Zehnder « primaire ». Dans l'exemple de la figure, la tension de polarisation de l'interféromètre de Mach-Zehnder primaire est appliquée à une troisième entrée de contrôle DC, ce qui permet de contrôler la phase relative entre les deux bras de l'interféromètre, et par conséquent du signal de sortie.

La figure 3 illustre un convertisseur de fréquence selon un premier mode de réalisation de l'invention.

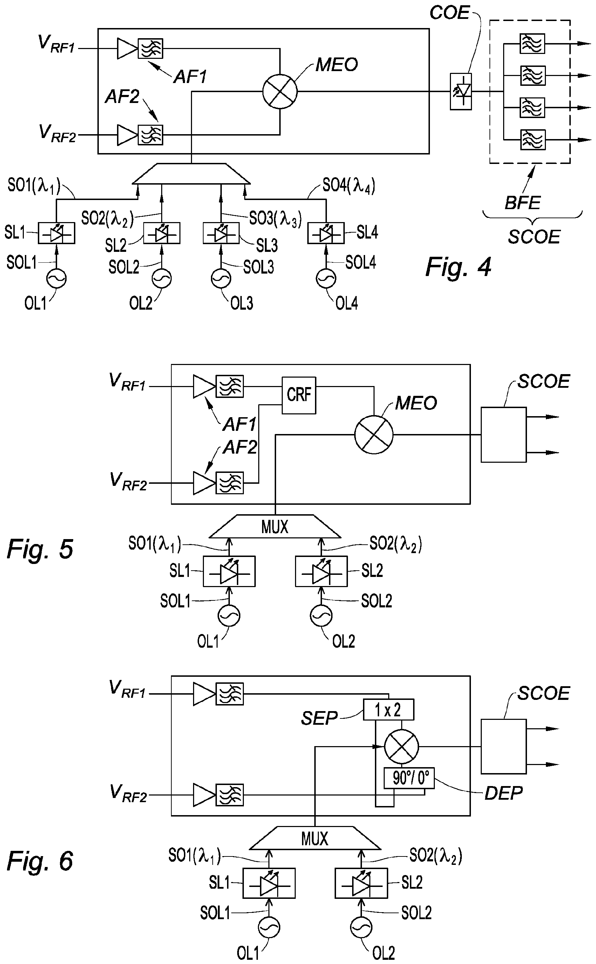

Le premier signal RF V_{RF1}, ayant une fréquence centrale f_{RF1}, et le deuxième signal RF V_{RF2}, ayant une fréquence centrale f_{RF2}, sont, amplifiés et filtrés par des blocs d'amplification et filtrage respectifs AF1, AF2 (optionnels), puis appliqués aux deux entrées RF d'un modulateur électro-optique d'intensité à double accès RF (voir par exemple les figures 2A, 2C, 2D). Sur la figure 3 (et également sur les figures 4, 5 et 6) le modulateur - éventuellement équipé d'un combineur RF (CRF) - est désigné de manière générale par la référence MEO. Le circuit et la tension de polarisation ne sont pas représentés dans un souci de simplification.

Deux sources optiques SL1, SL2, émettant à des longueurs d'onde respectives λ₁, λ₂ sont modulées par des signaux mono-fréquentiels OL, SOL1, SOL2, de fréquence f_{OL1,} f_{OL2} respectivement, générés respectivement par des oscillateurs locaux, OL1, OL2. On désigne par SO1 et SO2 les signaux optiques à la longueur d'onde λ₁ et λ₂ respectivement, dont l'enveloppe est modulée à la fréquence f_{OL1}, f_{OL2} respectivement.

Le nombre de signaux optiques d'OL, égal à deux, est donné uniquement à titre d'exemple et n'est pas limitatif.

Les sources SL1 peuvent par exemple être des lasers à semiconducteur, modulées directement par les signaux OL1, OL2 si la fréquence de ces derniers n'est pas trop élevée (< 15 GHz) ou des sources laser émettant en régime continu, leur flux optique étant modulé par un modulateur intégré ou externe piloté par les signaux SOL1, SOL2. La source optique et l'oscillateur local peuvent également être intégrés dans un oscillateur optoélectronique. La génération des signaux OL1 et OL2 sous forme photonique peut par exemple être réalisée à partir d'un laser impulsionnel (ou à blocage de modes dit en anglais « mode-locked laser ») ou un laser bi-mode dont, respectivement la période des impulsions ou la différence fréquentielle entre les deux modes correspondent à la fréquence OL d'intérêt.

Les signaux optiques OL ainsi modulés sont multiplexés par un multiplexeur MUX, (i.e. WDM de l'anglais « Wavelength Division Multiplexing », c'est-à-dire multiplexage par répartition en longueur d'onde) et injectés à l'entrée optique du modulateur MEO par l'intermédiaire d'une fibre optique ou, dans le cas d'une solution intégrée, d'un guide d'onde planaire.

On récupère à la sortie du modulateur électro-optique deux signaux optiques aux longueurs d'onde λ₁ et λ₂ dont l'enveloppe présente une modulation complexe. Le signal à la longueur d'onde λ₁ présente notamment des composantes spectrales aux fréquences f_{RF1}, f_{RF2}, f_{LO1}. De même, le signal à la longueur d'onde λ₂ présente notamment des composantes spectrales aux fréquences f_{RF1}, f_{RF2}, f_{LO2} Ces deux signaux optiques sont ensuite transmis par fibre optique (ou guide d'onde planaire) à un démultiplexeur DEMUX qui permet de les filtrer en fréquence et de les diriger vers des photodétecteurs (ou convertisseurs optiques-électriques) COE1, COE2, typiquement des photodiodes de type PIN (positif-intrinsèque-négatif) ou UTC (de l'anglais « Uni-Travelling Carrier »).

Les signaux électriques générés par photodétection des longueurs d'onde λ₁, λ₂ contiennent les composantes spectrales aux fréquences f_{RF1}+f_{LO1}, f_{RF1}-f_{LO1}, f_{RF2}+f_{LO1}, f_{RF2}-f_{LO1}, 2f_{LO1}, f_{RF1}±2f_{LO1}, et f_{RF1}+f_{LO2}, f_{RF1}-f_{LO2}, f_{RF2}+f_{LO2}, f_{RF2}-f_{LO2}, 2f_{LO2}, f_{RF1}±2f_{LO2}, respectivement. Ces composantes spectrales d'intermodulation apparaissent au moment de la détection, à cause du fait que les photodétecteurs sont sensibles à l'intensité lumineuse, c'est-à-dire au carré du champ électrique.

Ils sont ensuite filtrés en technologie RF pour en extraire les composantes utiles et ainsi rejeter les autres. Par exemple, le convertisseur de la figure 3 permet de convertir le signal V_{RF1} à la fréquence f_{RF1}-f_{LO1} et le signal V_{RF2} à la fréquence f_{RF2}-f_{LO2}. Un seul modulateur électro-optique permet donc de remplacer avantageusement deux mélangeurs RF.

L'ensemble constitué du démultiplexeur DEMUX et des convertisseurs optiques-électriques COE1, COE2 forment ce que l'on peut appeler un système de conversion optique-électrique noté SCOE.

Dans le mode de réalisation de la figure 4, plus de deux signaux optiques sont injectés dans le modulateur MEO. Plus précisément, dans le convertisseur de la figure 4, quatre sources optiques SL1, SL2, SL3, SL4 émettant à des longueurs d'onde respectives λ₁, λ₂, λ₃, λ₄ sont modulées par des signaux mono-fréquentiels RF SOL1, SOL2, SOL3, SOL4 de fréquence f_{OL1}, f_{OL2}, f_{OL3}, f_{OL4}, générés respectivement par des oscillateurs locaux, OL1, OL2, OL3, OL4. Le nombre de quatre est donné uniquement à titre d'exemple et n'est pas limitatif. Cela permet d'effectuer des conversions de fréquence multiples des deux signaux RF V_{RF1} et V_{RF2}. Par exemple, le convertisseur de la figure 4 permet de convertir le signal V_{RF1} à la fréquence f_{RF1}-f_{LO1} mais également à la fréquence f_{RF1}-f_{LO3}, et le signal V_{RF2} à la fréquence f_{RF2}-f_{LO2} et à la fréquence f_{RF2}-f_{LO4}.

En outre, le mode de réalisation de la figure 4 se différencie de celui de la figure 3 en ce que le convertisseur de la figure 4 présente un système de détection optique-électrique SDOE différent de celui de la figure 3. Ce système comprend un seul photodétecteur DOE qui génère un signal électrique complexe dont les composantes spectrales utiles sont extraites par une banque de filtres électriques BFE. Dans ce cas, les longueurs d'onde multiplexées doivent présenter un espacement fréquentiel suffisamment important pour que le battement hétérodyne à la fréquence différence entre elles ne génère pas de raie parasite dans la bande utile. Cette approche facilite l'utilisation d'une photodiode équilibrée pour la conversion optique-électrique, à la condition que le modulateur électro-optique soit à double sortie optique (voir la figure 2C).

Bien entendu, le système de conversion optique-électrique de la figure 3 peut également être utilisé dans un convertisseur mettant en œuvre plus de deux signaux optiques, et réciproquement celui de la figure 4 peut également être utilisé dans un convertisseur mettant en œuvreseulement deux signaux optiques.

La figure 5 illustre un convertisseur de fréquence selon un troisième mode de réalisation de l'invention, mettant en œuvreun modulateur électro-optique à accès RF unique et sortie optique unique, tel que celui illustré sur la figure 2B. Les deux signaux RF V_{RF1} et V_{RF2}, sont combinés par le combineur radiofréquence CRF avant d'être appliqués à l'entrée RF unique du modulateur. La structure du système de conversion optique-électrique SCOE est identique à celle présentée sur la figure 3 précédemment et est constituée d'un démultiplexeur associé à autant de photodiodes qu'il n'y a d'oscillateurs locaux.

La figure 6 illustre un convertisseur de fréquence selon un quatrième mode de réalisation de l'invention, dans lequel une modulation à bande latérale unique (SSB de l'anglais Single SideBand) est réalisée. Pour cela, le signal V_{RF1} est divisé en deux composantes de même amplitude par un séparateur RF noté SEP. L'une de ces composantes est appliquée à la première entrée RF du modulateur MEO ; l'autre composante est déphasée, par exemple de 90° (π/2 radians) pour une polarisation à la quadrature, et combinée avec le deuxième signal à radiofréquence V_{RF2} au moyen d'un combineur/déphaseur DEP avant d'être appliquée à la seconde entrée RF du modulateur MEO (plus généralement, la valeur du déphasage à appliquer pour obtenir une modulation SSB dépend de la tension de polarisation du modulateur). La présence de composants purement RF tels que SEP, DEP limite le caractère large bande du convertisseur, comme c'est également le cas pour le mode de réalisation de la figure 5. L'utilisation d'une modulation à bande spectrale unique réduit le nombre de produits d'intermodulations présents dans le signal de photodétection.

Les figures 7A à 7C illustrent les performances d'un convertisseur de fréquence selon un mode de réalisation de l'invention, basé sur l'utilisation d'un modulateur électro-optique à double accès RF (figure 2A), et notamment l'importance du choix de la tension de polarisation, et donc du point de fonctionnement du modulateur. Le cas considéré correspond à deux signaux RF, V_{FR1} et V_{RF2}, présentant des fréquences f_{RF1}=28,5 GHz (bande Ka) et f_{RF2}=49,7 GHz (bande V), et ayant une même amplitude égale à -10 dBm. Dans un souci de simplicité, un seul signal optique de puissance +14,5 dBm, modulé à une fréquence f_{OL1} de 10,2 GHz a été utilisé. Le signal de sortie (enveloppe du signal optique en sortie du modulateur) est observé sur une plage spectrale comprise entre 17 GHz et 22 GHz (bande utile en Ka : 17.2 GHz - 20.2 GHz), incluant donc la fréquence intermédiaire f_{FI}= f_{RF1} - f_{OL1} .

La figure 7A montre le spectre de puissance du signal RF de sortie, exprimé en dBm, dans le cas où la tension de polarisation V_{B} prend sa valeur optimale Vπ/2. Cette valeur de tension de polarisation est optimale notamment pour le premier mode de réalisation (décrit en figure 2A) en ce qu'elle maximise la réjection de la raie parasite à la fréquence f_{RF2}-f_{RF1}, susceptible de se placer dans la bande utile. Cependant, cette tension de polarisation optimale peut prendre d'autres valeurs, selon le type de modulateur utilisé. On peut noter, en plus de la composante utile à la fréquence f_{FI} une importante composante parasite à une fréquence 2f_{OL1} et d'autres composantes parasites plus faibles correspondant à des produits d'intermodulation aux fréquences 2f_{RF1}+f_{OL1}-f_{RF2} et f_{RF2}-3f_{OL1}. La composante à la fréquence 2f_{OL1} n'est pas gênante, car elle est mono-fréquentielle et peut donc être éliminée facilement. Les autres produits d'intermodulation, par contre, peuvent donner lieu à des interférences, il est donc important que leur niveau reste suffisamment faible par rapport à celui de la composante utile.

Les figures 7B et 7C correspondent à des situations dans lesquelles la tension de polarisation s'écarte de 10 mV et de 50 mV, respectivement, de sa valeur optimale. On peut remarquer que cet écart conduit à l'apparition d'un nouveau produit d'intermodulation, dominant, à une fréquence f_{RF2} - f_{RF1} .

Sur la figure 8, les points en forme de carré représentent la puissance relative du produit d'intermodulation à la fréquence f_{RF2} - f_{RF1} par rapport à celle du signal utile à la fréquence f_{FI} (en dBc) en fonction de la tension de polarisation V_{B} (la valeur optimale V_{π}/2 étant égale à 2,5 V), pour le premier mode de réalisation. On peut remarquer que cette puissance relative augmente rapidement avec l'écart |V_{B} - V_{π}/2|, d'où l'importance de stabiliser V_{B}. Pour V_{B} = V_{π}/2 l'intensité de la composante f_{RF2} - f_{RF1} ne tombe pas à zéro, car le tracé est limité par le plancher de bruit.

La figure 9 montre le spectre de puissance du signal RF de sortie pour le cas V_{B}=V_{π}/2 dans le cas d'un modulateur à double sortie optique suivi d'une détection par photodiode équilibrée (figure 2C). On peut constater que le bruit est réduit très considérablement, au point de ne pas être visible sur la figure, et que la composante parasite à la fréquence 2f_{RF1}+f_{OL1}-f_{RF2} a disparu. Ces meilleures performances, cependant, sont obtenues au prix d'une mise en œuvreplus délicate notamment due à l'appairage en longueur des fibres entre le modulateur et le récepteur optique..

A titre d'exemple, dans les futurs systèmes de télécommunication à très haut débit (VHTS, de l'anglais « Very High Throughput Systems ») le spectre des liaisons montantes des passerelles (« gateways » en anglais) pourra utiliser simultanément des bandes de fréquences Ka et V, tandis que les liaisons descendantes (faisceaux utilisateurs) seront en bande Ka. Chaque liaison montante nécessitera 1 (bande Ka) et 2 (bande V) conversions de fréquence différentes. Par exemple, pour un répéteur ayant 50 entrées provenant d'une passerelle, la technologie RF conventionnelle nécessite la mise en œuvrede 50 amplificateurs à bas bruit (LNA, de l'anglais « Low Noise Amplifier ») en bande V, 50 démultiplexeurs, 100 convertisseurs de la bande V à la bande Ka et 50 convertisseurs Ka à Ka.

La figure 11 illustre un satellite de télécommunications SAT comprenant un ensemble d'antennes en réception REC pour recevoir des signaux de liaison montante LM d'une passerelle GW, un ensemble d'antenne en transmission TRAN pour émettre des faisceaux utilisateur formant une liaison descendante LD et une charge utile de télécommunications CUT réalisant, entre autres, les conversions de fréquence et interconnexions nécessaires.

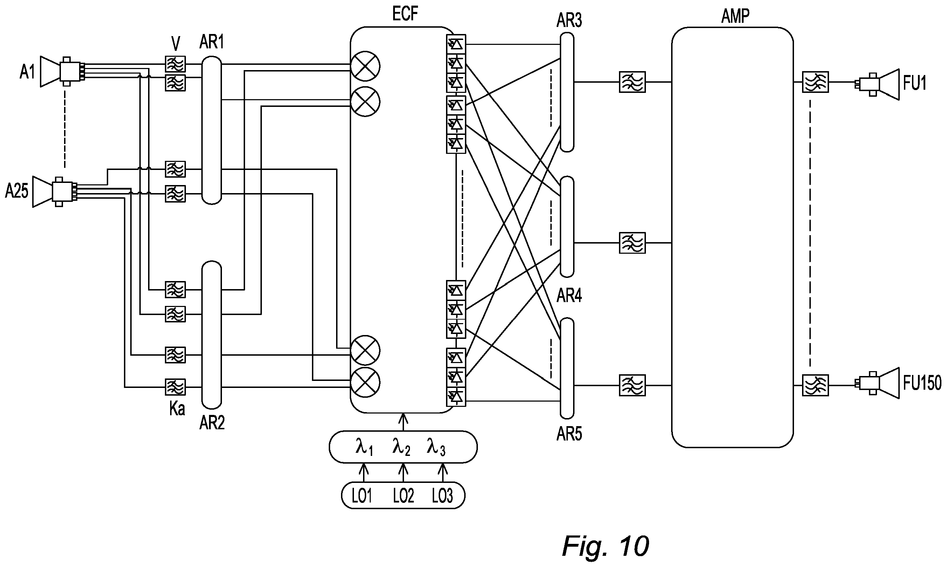

La figure 10 est un schéma fonctionnel d'une telle charge utile, qui permet de gérer cette situation en utilisant seulement 50 convertisseurs de fréquences photoniques (vs.150 pour la technologie RF) selon l'invention. Cela a un impact positif et significatif sur les budgets de masse, de puissance et de coûts du satellite.

La charge utile de la figure 10 est une voie aller recevant les signaux de 25 stations émettrices et les rediffusant vers les 150 faisceaux utilisateurs. Le nombre de stations émettrices et de faisceaux est donné à titre d'exemple uniquement. Elle comprend un réseau de 25 antennes A1 - A25 fonctionnant, en réception, dans les bandes V (autour de 50 GHz) et Ka (autour de 30 GHz), sur deux polarisations orthogonales. Ainsi chaque antenne a deux sorties, une pour polarisation et bande de fréquence. Chaque sortie antenne est filtrée sur la bande passante adéquate, en bande V ou en bande Ka. Ensuite des anneaux de redondance AR1, AR2 à base de commutateurs RF permettent d'implémenter des voies supplémentaires en redondance froide.

L'ensemble désigné par la référence ECF comprend 50 convertisseurs de fréquence photoniques selon l'invention. Chaque modulateur électro-optique de cet ensemble reçoit sur une première entrée RF un signal en bande Ka, sur une deuxième entre RF un signal en bande V et sur son entrée optique trois signaux optiques multiplexés à trois longueurs d'ondes distinctes, λ₁, λ₂, λ₃ modulés à des fréquences RF respectives par trous oscillateurs locaux LO1, LO2, LO3. En sortie de chaque modulateur, un photodétecteur permet de récupérer des signaux RF correspondant aux différents mélanges des fréquences RF reçues et générées par les oscillateurs locaux. Les trois signaux utiles sont :
- le signal reçu en bande Ka, désormais translaté à 20 GHz environ ;
- les deux signaux reçus correspondant aux sous-bandes de la bande V, eux aussi translatés à 20 GHz environ.

En sortie, des anneaux de redondance AR3, AR4, AR5 à base de commutateurs RF permettent de sélectionner les voies actives, et des filtres RF permettent de filtrer la sous-bande utile désirée, avant d'acheminer les signaux vers la section d'amplification à 20 GHz AMP.

Après l'amplification de puissance, un dernier étage de filtrage permet de nettoyer le spectre avant que les signaux ne soient réémis par les antennes transmission vers les 150 faisceaux utilisateurs.

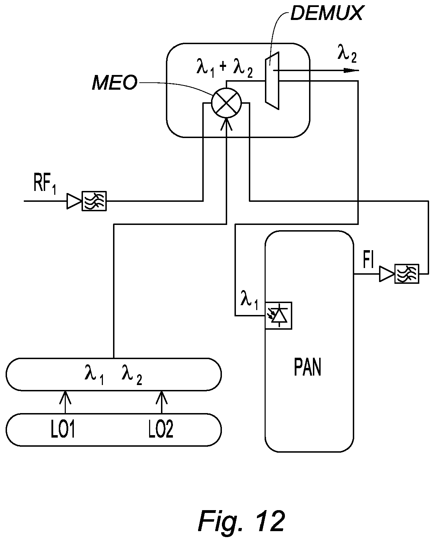

La figure 12 représente un convertisseur photonique réalisant simultanément la conversion descendante d'un signal RF, désigné par la référence RF₁, et la conversion ascendante d'un signal à fréquence intermédiaire Fi.

Dans le convertisseur de la figure 12, un modulateur Electro-Optique MEO à double accès RF est alimenté simultanément sur une de ses voies RF par le signal RF₁ et sur l'autre voie RF par le signal Fi provenant d'un processeur analogique ou numérique PAN.

Deux oscillateurs locaux LO1, LO2, de fréquences différentes, sont transférés sur des porteuses optiques respectivement à des longueurs d'onde λ₁ et λ₂, qui sont multiplexées en longueur d'onde et envoyés sur l'entrée optique du modulateur.

Le premier oscillateur local LO1, à la longueur d'onde λ₁, permet de réaliser la conversion de fréquence descendante du signal RF₁ vers un signal à une fréquence Fi1 compatible avec l'entrée du processeur PAN. Après démultiplexage (DEMUX) en longueur d'onde, en sortie du modulateur, seul le signal composite à la longueur d'onde λ₁ transportant la composante Fi1 est isolé sur une des voies de sortie correspondante du démultiplexeur. Ce signal est alors détecté par un convertisseur optique/électrique, filtré (par voie RF) et transmis au processeur pour le traitement.

Le deuxième oscillateur local LO2, à la longueur d'onde λ₂ permet de réaliser la conversion de fréquence montante du signal de sortie Fi du processeur PAN, à une fréquence intermédiaire, vers une radiofréquence RF₂ transmise, après filtrage, vers la section d'amplification de sortie de la charge utile (non représentée). Après démultiplexage en longueur d'onde, en sortie du modulateur, seul le signal composite à la longueur d'onde λ₂ transportant cette composante RF2 est isolé sur une des voies de sortie correspondante du démultiplexeur. Ce signal est alors détecté directement par un convertisseur optique/électrique ou peut être transmis par fibre optique jusqu'aux filtres RF et section d'amplification de sortie de la charge utile. Dans ce cas, la conversion optique/électrique est réalisée en amont des filtres RF.

Dans le convertisseur de la figure 12, le modulateur Electro-Optique MEO est polarisé de telle manière que les amplitudes des composantes parasites aux fréquences RF1±Fi1 soient significativement rejetées par rapport l'amplitude du signal utile désiré.

## Revendications

1. Convertisseur de fréquence photonique pour convertir un premier signal d'entrée radiofréquence (V_{RF1}) et un deuxième signal d'entrée radiofréquence (V_{RF2}) ayant respectivement deux fréquences différentes, en au moins deux signaux de sortie radiofréquence comprenant :
- un modulateur électro-optique d'intensité (MEO) présentant une entrée optique (EO) et au moins une sortie optique (SO),;
- un ensemble de sources optiques (SL1 - SL4) configurées pour générer des signaux optiques (SO1 - SO4) à au moins deux longueurs d'onde différentes (λ₁ - λ₄), modulés par des signaux d'oscillateur local (SOL1 - SOL4) respectifs dont deux au moins présentent des fréquences différentes ;
- un multiplexeur optique (MUX) agencé pour multiplexer lesdits signaux optiques et les injecter dans l'entrée optique du modulateur ;
- un système de détection optique/électrique (SCOE, COE1, COE2, PDE) configuré pour convertir des signaux optiques issus du modulateur électro-optique d'intensité vers le domaine radiofréquence ; et
- une banque de filtres électriques (BFE) configurée pour extraire des composantes spectrales des signaux convertis vers le domaine radiofréquence **caractérisé en ce que** le modulateur électro-optique d'intensité présente également au moins une entrée pour une tension continue et au moins une entrée RF (EC, EC1, EC2) pour recevoir lesdits deux signaux d'entrée radiofréquence (V_{RF1}, V_{RF2}) à des fréquences différentes ou une combinaison desdits deux signaux d'entrée radiofréquence (V_{RF1}, V_{RF2}) ;
et **en ce que** les composantes spectrales extraites par les filtres électriques (BFE) correspondent chacune à un signal radiofréquence d'entrée (V_{RF1}, V_{RF2}) mélangé avec l'un desdits signaux d'oscillateur local (SOL1 - SOL4).

2. Convertisseur de fréquence selon la revendication 1 dans lequel le dit modulateur électro-optique d'intensité (MEO) est du type à interféromètre de Mach-Zehnder.

3. Convertisseur de fréquence selon la revendication 2 dans lequel le dit modulateur électro-optique d'intensité est du type à interféromètre de Mach-Zehnder à double accès RF (MEODA) et présente deux entrées RF (EC1, EC2) pour deux signaux radiofréquence de modulation (V_{RF1}, V_{RF2}) respectifs.

4. Convertisseur de fréquence selon la revendication 2 dans lequel ledit modulateur électro-optique d'intensité est du type à interféromètre de Mach-Zehnder I/Q (MEOIQ) et présente deux entrées RF (EC1, EC2) pour deux signaux radiofréquence de modulation (V_{RF1}, V_{RF2}) respectifs.

5. Convertisseur de fréquence selon la revendication 2 dans lequel ledit modulateur électro-optique d'intensité est du type à interféromètre de Mach-Zehnder à accès RF unique (MEOAU) présentant une seule entrée RF (EC), le convertisseur comprenant également un combineur de signaux RF (CRF) configuré pour recevoir en entrée deux signaux RF de modulation (V_{RF1}, V_{RF2}) respectifs, les combiner et les appliquer à ladite entrée RF du modulateur électro-optique d'intensité.

6. Convertisseur de fréquence selon l'une des revendications 2 à 5 comprenant également un circuit de polarisation configuré pour appliquer à au moins une entrée de contrôle du modulateur électro-optique d'intensité une tension de polarisation (V_{B1}, V_{B2}, V_{B}) adaptée pour minimiser l'intensité d'une composante spectrale des signaux optiques issus du modulateur électro-optique d'intensité à une fréquence somme ou différence des fréquences des signaux radiofréquence de modulation.

7. Convertisseur de fréquence selon l'une des revendications précédentes comprenant également un démultiplexeur (DEMUX) optique agencé pour démultiplexer les signaux optiques issus du modulateur électro-optique d'intensité.

8. Convertisseur de fréquence selon l'une des revendications précédentes dans lequel ledit modulateur électro-optique d'intensité est du type à double sortie optique complémentaire (MEODS), le système de conversion optique/électrique comprenant au moins un photodétecteur équilibré (PDE).

9. Charge utile de télécommunication (CUT) pour un satellite (SAT) comprenant au moins un convertisseur de fréquence selon l'une des revendications précédentes.

10. Procédé de conversion de fréquence au moyen d'un convertisseur selon l'une des revendications précédentes comprenant les étapes suivantes :
- appliquer à l'entrée ou aux entrées RF (EC, EC1, EC2) du modulateur électro-optique d'intensité (MEO) du convertisseur deux signaux radiofréquence (V_{RF1}, V_{RF2}) dont les fréquences doivent être converties ;
- activer les sources optiques du convertisseur (SL1 - SL4) et pour générer lesdits signaux optiques (SO1 - SO4) à au moins deux longueurs d'onde différentes (λ₁ - λ₄), modulés par lesdits signaux d'oscillateurs locaux (SOL1 - SOL4) respectifs ;
- récupérer des signaux optiques issus de la sortie optique du modulateur électro-optique d'intensité, les convertir vers le domaine radiofréquence et les filtrer pour en extraire des composantes spectrales correspondant chacune à un signal radiofréquence d'entrée mélangé avec l'un desdits signaux d'oscillateur local.

11. Procédé selon la revendication 10 comprenant également l'étape suivante :
- appliquer à au moins une entrée de contrôle du modulateur électro-optique d'intensité une tension de polarisation (V_{B1}, V_{B2}, V_{B}) adaptée pour minimiser l'intensité d'une composante spectrale des signaux RF issus du système de détection optique/électrique à une fréquence somme ou différence des fréquences des signaux radiofréquence de modulation.

## Patentansprüche

1. Photonenfrequenzwandler zum Umwandeln eines ersten Radiofrequenzeingangssignals (V_{RF1}) und eines zweiten Radiofrequenzeingangssignals (V_{RF2}), jeweils mit zwei unterschiedlichen Frequenzen, in mindestens zwei Radiofrequenzausgangssignale, der Folgendes umfasst:
- einen elektro-optischen Intensitätsmodulator (MEO) mit einem optischen Eingang (EO) und mindestens einem optischen Ausgang (SO);
- einen Satz optischer Quellen (SL1 - SL4), die zum Erzeugen von optischen Signalen (SO1 - SO4) mit mindestens zwei verschiedenen Wellenlängen (λ₁ - λ₄) konfiguriert sind, moduliert durch jeweilige lokale Oszillatorsignale (SOL1 - SOL4), von denen mindestens zwei unterschiedliche Frequenzen haben;
- einen optischen Multiplexer (MUX), der zum Multiplexen der optischen Signale und zum Einspeisen derselben in den optischen Eingang des Modulators ausgelegt ist;
- ein optisch-elektrisches Detektionssystem (SCOE, COE1, COE2, PDE), das zum Umwandeln von optischen Signalen aus dem elektrooptischen Intensitätsmodulator in den Radiofrequenzbereich konfiguriert ist; und
- eine elektrische Filterbank (BFE), die zum Extrahieren von Spektralkomponenten von in den Radiofrequenzbereich umgewandelten Signalen konfiguriert ist, **dadurch gekennzeichnet, dass** der elektro-optische Intensitätsmodulator auch mindestens einen Eingang für eine Gleichspannung und mindestens einen RF-Eingang (EC, EC1, EC2) zum Empfangen der beiden Radiofrequenzeingangssignale (V_{RF1}, V_{RF2}) mit unterschiedlichen Frequenzen oder einer Kombination der beiden Radiofrequenzeingangssignale (V_{RF1}, V_{RF2}) aufweist;
und dadurch, dass die von den elektrischen Filtern (BFE) extrahierten Spektralkomponenten jeweils einem Radiofrequenzeingangssignal (V_{RF1}, V_{RF2}) entsprechen, das mit einem der lokalen Oszillatorsignale (SOL1 - SOL4) gemischt ist.

2. Frequenzwandler nach Anspruch 1, wobei der elektro-optische Intensitätsmodulator (MEO) vom Typ Mach-Zehnder-Interferometer ist.

3. Frequenzwandler nach Anspruch 2, wobei der elektro-optische Intensitätsmodulator vom Typ Mach-Zehnder-Interferometer mit doppeltem RF-Zugang (MEODA) ist und zwei RF-Eingänge (EC1, EC2) für zwei jeweilige Radiofrequenzmodulationssignale (V_{RF1}, V_{RF2}) aufweist.

4. Frequenzwandler nach Anspruch 2, wobei der elektro-optische Intensitätsmodulator vom Typ Mach-Zehnder-Interferometer I/Q (MEOIQ) ist und zwei RF-Eingänge (EC1, EC2) für zwei jeweilige Radiofrequenzmodulationssignale (V_{RF1}, V_{RF2}) aufweist.

5. Frequenzwandler nach Anspruch 2, wobei der elektrooptische Intensitätsmodulator vom Typ Mach-Zehnder-Interferometer mit einem RF-Zugang (MEOAU) ist, der einen einzigen RF-Eingang (EC) hat, wobei der Wandler auch einen RF-Signalkombinierer (CRF) umfasst, der zum Empfangen von zwei jeweiligen RF-Modulationssignalen (V_{RF1}, V_{RF2}) am Eingang, zum Kombinieren derselben und zum Anlegen derselben an den RF-Eingang des elektrooptischen Intensitätsmodulators konfiguriert ist.

6. Frequenzwandler nach einem der Ansprüche 2 bis 5, der ferner eine Polarisationsschaltung umfasst, die zum Anlegen einer Polarisationsspannung (V_{B1}, V_{B2}, V_{B}) an mindestens einen Steuereingang des elektrooptischen Intensitätsmodulators konfiguriert ist, die zum Minimieren der Intensität einer Spektralkomponente der optischen Signale aus dem elektrooptischen Intensitätsmodulator bei einer Summen- oder Differenzfrequenz der Frequenzen der Radiofrequenzmodulationssignale ausgelegt ist.

7. Frequenzwandler nach einem der vorherigen Ansprüche, der auch einen optischen Demultiplexer (DEMUX) umfasst, der zum Demultiplexen der optischen Signale aus dem elektrooptischen Intensitätsmodulator ausgelegt ist.

8. Frequenzwandler nach einem der vorherigen Ansprüche, wobei der elektrooptische Intensitätsmodulator vom Typ mit komplementärem doppeltem optischem Ausgang (MEODS) ist, wobei das optisch-elektrische Wandlersystem mindestens einen symmetrischen Photodetektor (PDE) umfasst.

9. Telekommunikationsnutzlast (CUT) für einen Satelliten (SAT) mit mindestens einem Frequenzwandler nach einem der vorherigen Ansprüche.

10. Verfahren zum Frequenzwandeln mittels eines Wandlers nach einem der vorherigen Ansprüche, das die folgenden Schritte beinhaltet:
- Anlegen von zwei Radiofrequenzsignalen (V_{RF1}, V_{RF2}), deren Frequenzen umgewandelt werden sollen, an den oder die HF-Eingänge (EC, EC1, EC2) des elektro-optischen Intensitätsmodulators (EOM) des Wandlers;
- Aktivieren der optischen Quellen des Wandlers (SL1 - SL4) und zum Erzeugen der optischen Signale (SO1 - SO4) mit mindestens zwei verschiedenen Wellenlängen (λ₁ - λ₄), moduliert durch die jeweiligen lokalen Oszillatorsignale (SOL1 - SOL4);
- Rückgewinnen von optischen Signalen aus dem optischen Ausgang des elektrooptischen Intensitätsmodulators, Umwandeln derselben in den Radiofrequenzbereich und Filtern derselben, um Spektralkomponenten, jeweils entsprechend einem Radiofrequenzeingangssignal, daraus zu extrahieren, das mit einem der genannten lokalen Oszillatorsignale gemischt ist.

11. Verfahren nach Anspruch 10, das auch den folgenden Schritt beinhaltet:
- Anlegen einer Polarionsationsspannung (V_{B1}, V_{B2}, V_{B}) an mindestens einen Steuereingang des elektrooptischen Intensitätsmodulators, ausgelegt zum Minimieren der Intensität einer Spektralkomponente der RF-Signale aus dem optischelektrischen Detektionssystem bei einer Summen- oder Differenzfrequenz der Frequenzen der Radiofrequenzmodulationssignale.

## Claims

1. Photonic frequency converter for converting a first input radiofrequency signal (V_{RF1}) and a second input radiofrequency signal (V_{RF2}) respectively having different frequencies into at least two output radiofrequency signals comprising:
- an electro-optical intensity modulator (MEO) having an optical input (EO) and at least one optical output (SO);
- a set of optical sources (SL1-SL4) that are configured to generate optical signals (SO1-SO4) at at least two different wavelengths (λ₁-λ₄), said signals being modulated by respective local-oscillator signals (SOL1-SOL4) at least two of which have different frequencies;
- an optical multiplexer (MUX) arranged to multiplex said optical signals and to inject them into the optical input of the modulator;
- an optical/electrical detecting system (SCOE, COE1, COE2, PDE) configured to convert the optical signals from the electro-optical intensity modulator to the radiofrequency domain; and
- a bank of electrical filters (BFE), which is configured to extract spectral components of the signals converted to the radiofrequency domain, **characterized in that** the electro-optical intensity modulator also has at least one input for a DC voltage and at least one RF input (EC, EC1, EC2) for receiving the two input radiofrequency signals (V_{RF1}, V_{RF2}) at different frequencies or a combination of said two input radiofrequency signals (V_{RF1}, V_{RF2});
and **in that** the spectral components extracted by the electrical filters (BFE) each correspond to an input radiofrequency signal (V_{RF1}, V_{RF2}) mixed with one of the local-oscillator signals (SOL1-SOL4).

2. Frequency converter according to Claim 1, wherein said electro-optical intensity modulator (MEO) is a Mach-Zehnder interferometer modulator.

3. Frequency converter according to Claim 2, wherein said electro-optical intensity modulator is a dual-drive Mach-Zehnder interferometer modulator (MEODA) and has two RF inputs (EC1, EC2) for two respective modulation radiofrequency signals (V_{RF1}, V_{RF2})

4. Frequency converter according to Claim 2, wherein said electro-optical intensity modulator is an I/Q Mach-Zehnder interferometer modulator (MEOIQ) and has two RF inputs (EC1, EC2) for two respective modulation radiofrequency signals (V_{RF1}, V_{RF2}).

5. Frequency converter according to Claim 2, wherein said electro-optical intensity modulator is a single-RF-drive Mach-Zehnder interferometer modulator (MEOAU) having a single RF input (EC), the converter also comprising a RF signals combiner (CRF) that is configured to receive as input two respective modulation RF signals (V_{RF1}, V_{RF2}), to combine them and to apply them to said RF input of the electro-optical intensity modulator.

6. Frequency converter according to one of Claims 2 to 5, also comprising a biasing circuit configured to apply to at least one control input of the electro-optical intensity modulator a bias voltage (V_{B1}, V_{B2}, V_{B}) suitable for minimizing the intensity of a spectral component of the optical signals from the electro-optical intensity modulator at a frequency that is the sum or difference of the frequencies of the modulation radiofrequency signals.

7. Frequency converter according to one of the preceding claims, also comprising an optical demultiplexer (DEMUX) arranged to demultiplex the optical signals from the electro-optical intensity modulator.

8. Frequency converter according to one of the preceding claims, wherein said electro-optical intensity modulator is a complementary dual optical output modulator (MEODS), the optical/electrical converting system comprising at least one balanced photodetector (PDE).

9. Telecommunication payload (CUT) for a satellite (SAT) comprising at least one frequency converter according to one of the preceding claims.

10. Method for converting a frequency by means of a converter according to one of the preceding claims comprising the following steps:
- applying, to the RF input or inputs (EC, EC1, EC2) of the electro-optical intensity modulator (MEO) of the converter, two radiofrequency signals (V_{RF1}, V_{RF2}) the frequencies of which must be converted;
- activating the optical sources of the converter (SL1-SL4) and for generating said optical signals (SO1-SO4) at at least two different wavelengths (λ₁-λ₄), modulated by said respective local-oscillator signals (SOL1-SOL4);
- collecting the optical signals from the optical output of the electro-optical intensity modulator, converting them to the radiofrequency domain and filtering them to extract therefrom spectral components each corresponding to one input radiofrequency signal mixed with one of said local-oscillator signals.

11. Method according to Claim 10 also comprising the following step:
- applying to at least one control input of the electro-optical intensity modulator a bias voltage (V_{B1}, V_{B2}, V_{B}) suitable for minimizing the intensity of a spectral component of the RF signals from the optical/electrical detecting system at a frequency that is the sum or difference of the frequencies of the modulation radiofrequency signals.
